# EUROPEAN PATENT SPECIFICATION

(11) **EP 4 014 804 B1**
(45) Date of publication and mention of the grant of the patent: **01.05.2024**
(21) Application number: 21215047.8
(22) Date of filing: 16.12.2021
(51) Int. Cl.: A47J 31/54

(54) **HEAT EXCHANGER FOR MACHINES FOR PREPARING INFUSED BEVERAGES**
WÄRMETAUSCHER FÜR MASCHINE ZUR HERSTELLUNG VON AUFGUSSGETRÄNKEN
ÉCHANGEUR DE CHALEUR POUR MACHINES DE PRÉPARATION DE BOISSONS INFUSÉES

(30) Priority: 21.12.2020 IT 202000031604
(43) Date of publication of application: 22.06.2022
(73) Proprietor: Capitani S.r.l., 22043 Solbiate con Cagno (CO) (IT)
(72) Inventor: CAPITANI, Gionata, 22070 Albiolo (CO) (IT)
(74) Representative: Fabiano, Piero

(56) References cited:
- EP-A1- 1 046 367
- WO-A1-2016/016857
- CN-A- 110 215 120
- CN-A- 111 603 046

## Description

### Field of the invention

The present invention concerns the field of machines for making infused beverages such as coffee, tea, herbal teas, chocolate, etc. starting from a capsule or pod containing an aromatic substance.

In particular, the present invention concerns a heat exchanger for machines for making infused beverages.

### Known art

The heat exchangers of machines for making infused beverages are typically made of aluminum and comprise a duct, for the passage of water, made by molding or by removing material from the aluminum itself and a coil functionally placed in contact with the duct to transfer heat to the latter in order to heat the liquid flow, typically water, circulating therein. CN111603046 discloses a machine for making infused beverages provided with an heat exchanger according to the generic state of the art.

Such type of heaters is generally bulky and made in two pieces which can be coupled, each piece making a half-duct.

Recently, exchangers, wherein the duct for the passage of the liquid to be heated is made of a steel duct that is then drowned into an aluminum box-shaped element, were suggested to prevent food contamination.

This method of implementation allows, among other, to make exchangers of reduced size and is thus preferable.

The Applicant has noticed that both types of heat exchangers for machines for making infused beverages described above have thermal probes coupled to the outside by metal ties or outer supports.

This arrangement of the parts and couplings increases the inner volumes of the machine. The Applicant has thus also addressed the problem of making a heat exchanger which reduces the inner volumes of the machine for preparing infused beverages by optimizing the coupling between the thermal probes and the exchanger.

Moreover, the Applicant has noticed that both types of heat exchangers described above currently have ducts for the inflow and outflow of the liquid to be heated, which are formed by tubular lengths extending from the box-shaped body.

The plastic or rubber tubes of the hydraulic circuit of the machine are mounted on the latter by mechanical interference.

The Applicant has however noted that the latter type of connection or couplings between the plastic or rubber tubes and the tubular inlet/outlet lengths of the exchangers do not seem optimal. In fact, over time, the plastic or rubber tubes wear out, thus generating leakages right at the connection or coupling.

The Applicant has thus addressed the problem of making a heat exchanger for machines for preparing infused beverages of reduced size which solves the food contamination problems of traditional exchangers, which improves the coupling between thermal probes and the exchanger and which simultaneously reduces the occurrence of wear problems of the plastic or rubber tubes at the inlets/outlets of the liquid from/to the exchanger.

### Summary of the invention

Thus the invention, in a first aspect thereof, concerns a heat exchanger for machines for preparing infused beverages comprising the features of claim 1.

In the aforesaid aspect, the present invention can have at least one of the preferred characteristics described hereunder.

Preferably, said at least one support comprises first constraining means inside the machine for preparing the infused beverage; and second constraining means for constraining the box-shaped body to said support; said first constraining means being separated and not in contact with said second constraining means.

Preferably, the half-seats comprise detents for locking said heat sensors therein. Conveniently, the support also has two half-seats of said accommodating seats. The half-seats of the support being made on a side of the support facing the box-shaped body, when the heat exchanger is mounted.

The half-seats comprise grooves made on a side of the box-shaped body.

Conveniently, the heat exchanger comprises two push-in devices for coupling said duct to two small tubes of the hydraulic circuit of the machine for preparing infused beverages; each push-in device comprising at least one tubular bushing provided with an inlet/outlet for a small tube of the hydraulic circuit of the machine for preparing infused beverages and with removable constraining means of the small tube inside said tubular bushing.

Preferably, the removable constraining means comprise a fork and the tubular bushing comprises a side surface comprising a slot passing through the insertion of the fork; an inlet opening for a rubber or plastic tube of the hydraulic circuit; the small tube having two sealing rings spaced to form a seat for the fork; an outlet opening shaped to be coupled to an inlet/outlet end of the liquid to be heated; the tubular bushing being partially drowned in the box-shaped body and extending from the latter such as the slot is positioned outside with respect to the box-shaped body.

Advantageously, the tubular bushing is made of steel.

Further characteristics and advantages of the invention will become clearer in the detailed description of some preferred, but not exclusive, embodiments of a heat exchanger, in particular for machines for preparing an infused beverage according to the present invention.

### Brief description of the drawings

Such description will be explained hereunder with reference to the accompanying drawings, provided by way of example only and thus not limiting, in which:
- figure 1 shows a schematic side view of a heat exchanger according to the present invention, mounted on a machine for preparing infused beverages;
- figure 2 is a schematic perspective view of an infusion assembly according to the present invention; and
- figure 3 shows a schematic perspective view of a heat exchanger according to the present invention, in particular shown from the side intended to lean on the support for the machine for preparing the infused beverage.

### Detailed description of embodiments of the invention

With reference to the figures, a heat exchanger, in particular for machines for preparing infused beverages, for example by means of a capsule containing an aromatic substance,, according to the present invention, is denoted by the numerical reference 10.

The heat exchanger 10 comprises a box-shaped body 1, a duct 2 for the passage of a liquid to be heated, made of steel and extending with a curvilinear pattern, preferably sinusoidal, inside the box-shaped body 1.

The box-shaped body 1, preferably parallelepiped-shaped, is made of aluminum. The duct 2 extends inside the box-shaped body 1 between an inlet and an outlet of the liquid to be heated, which are respectively placed in a top area and in a bottom area of the box-shaped body 1.

Along its course or path, the duct 2 is in contact, in a known way, with a heating element, such as an electric coil 30 which, by transferring heat to the duct 2, allows to heat the water circulating therein.

The heat exchanger 10 further comprises two push-in devices 3 for coupling the duct 2 to two small tubes 12, 13, preferably made of plastic or rubber, of the hydraulic circuit of the machine for preparing beverages.

The tubes 12, 13 of the hydraulic circuit are respectively entering and exiting the heat exchanger 10.

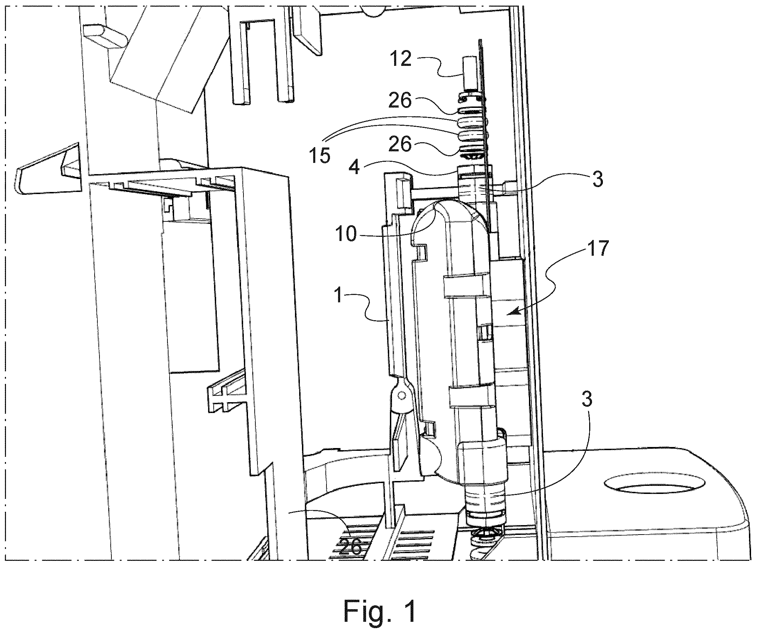

In detail, with reference to the embodiments shown in figures 1-3, each push-in device 3 comprises a hollow tubular bushing 4 comprising, at an end, an inlet/outlet for a small tube 12, 13 and, at the opposite end, an interface for the duct 2.

The tubular bushing 4 further has a side surface 8 extending between the two ends and a through slot 5 made on the side surface.

The tubular bushing 4 is partially drowned in the box-shaped body 1 such as the through slot 5 and the inlet/outlet end for a small tube 12/13 come out of the latter. The through slot 5 is shaped to accommodate a removable fork 6, preferably made of metal, comprising two prongs 7 joined together at an end and spaced such as to house a small tube 12, 13 between them.

The two prongs 7 are thus placed at a distance substantially equal to the diameter of the small tubes 12, 13.

The small tube 12, 13 is intercepted and constrained by mechanical interference in the tubular bushing 4 by inserting the fork 6 into the through slot 5.

The small tube 12, 13 is free to come out of the tubular bushing 4 when the fork is removed from the through slot 5.

For greater safety, at the coupling area between the small tube 12, 13 and the fork 6, two sealing rings 15, such as two O-rings mounted on the small tube 12,13 at an appropriate distance, and two metal retaining rings 26 are provided.

The two retaining rings 26 counteract the sliding of the sealing rings 15 on the small tube 12, 13.

Each tubular bushing 4 being preferably made of steel.

According to another embodiment, the heat exchanger does not have the push-in devices 3.

Always for the purpose of reducing the inner volumes of the machine for making infused beverages, the heat exchanger 10 has a particular support 17 shaped to constrain the box-shaped body 1 inside the machine 100 for preparing infused beverages.

The support 17 is made of insulating material, such as for example plastic or silicone, and the transmission of heat from the heat exchanger to the machine itself is thus prevented this way.

The support 17 is like an inverted U-shaped bracket 18 preferably made of plastic and comprising first constraining means shaped to constrain the support 17 itself to the machine 100 for preparing infused beverages, and second constraining means 19 for constraining the box-shaped body 1 to the support 17.

The first constraining means 16 being separated and not in contact with the second constraining means 19 such as to prevent, or anyhow limit, the transmission of heat between the exchanger 1 and the machine 100 for preparing infused beverages.

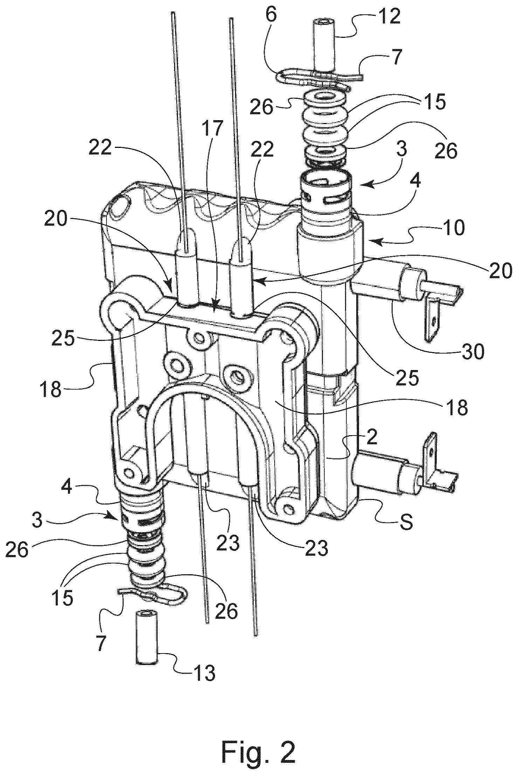

As shown in figure 2, the support 17 forms, together with the box-shaped body 1, the seats 20 for accommodating the heat sensors 21 shown in figure 2.

To this end, the box-shaped body 1 has two half-seats 22 of said accommodating seats 20.

The half-seats 22 are made on the side or face of the box-shaped body 1 facing the support 17, when the heat exchanger 10 is mounted.

The half-seats 22 are achieved from the grooves 23 with semicircular section, which are made on a side of the box-shaped body 1.

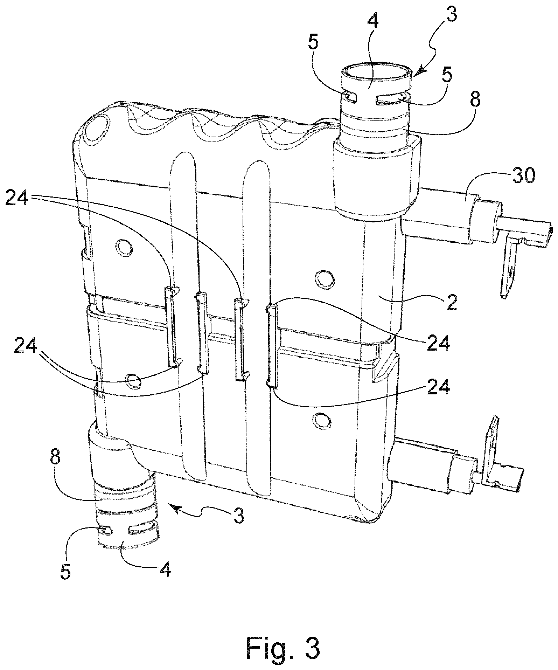

Preferably, the half-seats 22 made on the box-shaped body 1, as better shown in figure 3, comprises detents 24 for locking the heat sensors 21 therein.

In particular, two couples of detents 24 are present for each half-seat 22.

In each couple, the detents 24 are arranged at a distance such as to allow the insertion of a heat sensor 21 (not shown in figure 3) therein and which is preferably constituted by a tubular element.

The accommodating seats 20 for accommodating the heat sensors 21 further comprise two further half-seats 25 made on the support 17.

In particular, the half-seats 25 are made on a side of the support 17 facing the box-shaped body 1, when the heat exchanger 10 is mounted.

Preferably, the half-seats 25 also comprise the grooves 26 with semicircular section, which are made on a side of the support 17.

The half-seats 25 are shaped and arranged such as to be combined with the half-seats 22, such as to form the seats 20, when the heat exchanger 10 is mounted.

Several changes can be made to the embodiments described in detail, anyhow remaining within the protection scope of the invention, defined by the following claims.

## Claims

1. Heat exchanger (10) for machines for preparing infused beverages, comprising a box-shaped body (1), a duct (2) for the passage of a liquid to be heated, said duct (2) being made of steel and extending inside the box-shaped body (1), a heating element placed in contact with said duct (2) for the passage of the liquid; said duct (2) extending according to a curvilinear path inside said box-shaped body (1) and having an inlet and an outlet of the liquid to be heated, **characterized by** comprising at least one support (17) for constraining said box-shaped body (1) inside the machine (100) for preparing infused beverages; said at least one support being made of insulating material; said support (17) making, together with said box-shaped body, a seat (20) for accommodating heat sensors (21);
- said box-shaped body (1) having two half-seats (22) of said accommodating seats (20); said half-seats (22) being made on the side of the box-shaped body (1) facing said support (17) when the heat exchanger (10) is mounted, said half seats (22) comprising grooves (23) made on a side of the box-shaped body (1).

2. Heat exchanger (10) according to claim 1, **characterized in that** said at least one support (17) comprises first constraining means (16) inside the machine (100) for preparing the infused beverage; and second constraining means (19) for constraining said box-shaped body (1) to said support (17); said first constraining means (16) being separated and not in contact with said second constraining means (19).

3. Heat exchanger (10) according to claim 1 or 2, **characterized in that** said half-seats (22) comprise detents (24) for locking said heat sensors (21) therein.

4. Heat exchanger (10) according to any one of claims 1 to 3, **characterized in that** said support (17) has two half-seats (25) of said accommodating seats (20); said half-seats (25) being made on a side of the support (17) facing said box-shaped body (1) when the heat exchanger (10) is mounted; said half-seats (25) comprising grooves (26) made on a side of the box-shaped body (1).

5. Heat exchanger (10) according to any one of claims 1 to 4, **characterized by** comprising two push-in devices (3) for coupling said duct (2) to two small tubes (12,13) of the hydraulic circuit of the machine (100) for preparing infused beverages; each push-in device (3) comprising at least one tubular bushing (4) provided with an inlet/outlet for a small tube (12,13) of the hydraulic circuit of the machine (100) for preparing infused beverages and with removable constraining means of the small tube (12,13) inside said tubular bushing (4).

6. Heat exchanger (10) according to claim 5, **characterized in that** said removable constraining means comprise a fork (6) and **in that** said tubular bushing (4) comprises a side surface comprising a slot (5) passing through the insertion of the fork (6); an inlet opening for a rubber or plastic tube of said hydraulic circuit; said tube having two sealing rings (15) spaced to form a seat for the fork (6); an outlet opening shaped to be coupled to said inlet/outlet end of the liquid to be heated; said tubular bushing (4) being partially drowned in the box-shaped body (1) and extending from the latter such as said slot (5) is positioned outside with respect to said box-shaped body (1).

7. Heat exchanger (10) according to claim 6, **characterized in that** said tubular bushing (4) is made of steel.

## Patentansprüche

1. Wärmetauscher (10) für Maschinen zur Zubereitung von Aufgussgetränken, umfassend einen kastenförmigen Körper (1), einen Kanal (2) für den Durchgang einer zu erhitzenden Flüssigkeit, wobei der Kanal (2) aus Stahl besteht und sich im Inneren des kastenförmigen Körpers (1) erstreckt, ein Heizelement, das in Kontakt mit dem Kanal (2) für den Durchgang der Flüssigkeit steht; wobei der Kanal (2) sich entlang eines kurvenförmigen Wegs im Inneren des kastenförmigen Körpers (1) erstreckt und einen Einlass und einen Auslass für die zu erhitzende Flüssigkeit aufweist, **dadurch gekennzeichnet, dass** mindestens eine Halterung (17) zum Befestigen des kastenförmigen Körpers (1) im Inneren der Maschine (100) zum Zubereiten von Aufgussgetränken vorgesehen ist; wobei die mindestens eine Halterung aus Isoliermaterial hergestellt ist; wobei die Halterung (17)
zusammen mit dem kastenförmigen Körper einen Sitz (20) zur Aufnahme von Wärmesensoren (21) bildet;
- wobei der kastenförmige Körper (1) zwei Halbsitze (22) der Aufnahmesitze (20) aufweist; wobei die Halbsitze (22) bei im montierten Zustand befindlichem Wärmetauscher (10) auf der dem Träger (17) zugewandten Seite des kastenförmigen Körpers (1) ausgebildet sind, wobei die Halbsitze (22) an einer Seite des kastenförmigen Körpers (1) ausgebildete Nuten (23) aufweisen.

2. Wärmetauscher (10) nach Anspruch 1, **dadurch gekennzeichnet, dass** die mindestens eine Halterung (17) erste Befestigungsmittel (16) innerhalb der Maschine (100) zum Zubereiten des Aufgussgetränks und zweite Befestigungsmittel (19) zum Befestigen des kastenförmigen Körpers (1) an der Halterung (17) umfasst, wobei die ersten Befestigungsmittel (16) von den zweiten Befestigungsmitteln (19) getrennt und nicht in Kontakt mit diesen sind.

3. Wärmetauscher (10) nach Anspruch 1 oder 2, **dadurch gekennzeichnet, dass** die Halbsitze (22) Rastnasen (24) aufweisen, um die Wärmesensoren (21) in diesen zu arretieren.

4. Wärmetauscher (10) nach einem der Ansprüche 1 bis 3, **dadurch gekennzeichnet, dass** die Halterung (17) zwei Halbsitze (25) der Aufnahmesitze (20) aufweist; wobei die Halbsitze (25) auf einer Seite der Halterung (17) ausgebildet sind, die im montierten Zustand des Wärmetauschers (10) dem kastenförmigen Körper (1) zugewandt ist; wobei die Halbsitze (25) Nuten (26) aufweisen, die an einer Seite des kastenförmigen Körpers (1) ausgebildet sind.

5. Wärmetauscher (10) nach einem der Ansprüche 1 bis 4, **dadurch gekennzeichnet, dass** er zwei Einsteckvorrichtungen (3) zum Verbinden des Kanals (2) mit zwei Röhrchen (12, 13) des Hydraulikkreislaufs der Maschine (100) für die Zubereitung von Aufgussgetränken umfasst; wobei jede Einsteckvorrichtung (3) mindestens eine rohrförmige Buchse (4) umfasst, die mit einem Einlass/Auslass für ein Röhrchen (12, 13) des Hydraulikkreislaufs der Maschine (100) zur Zubereitung von Aufgussgetränken und mit lösbaren Befestigungsmitteln für das Röhrchen (12, 13) innerhalb der rohrförmigen Buchse (4) versehen ist.

6. Wärmetauscher (10) nach Anspruch 5, **dadurch gekennzeichnet, dass** die lösbaren Befestigungsmittel eine Gabel (6) umfassen und dass die rohrförmige Buchse (4) eine Seitenfläche umfasst, die einen durchgehenden Schlitz (5) für die Einführung der Gabel (6) aufweist; eine Einlassöffnung für ein Gummi- oder Kunststoffrohr des Hydraulikkreislaufs; wobei das Rohr zwei Dichtungsringe (15) aufweist, die voneinander beabstandet sind, um einen Sitz für die Gabel (6) zu bilden; eine Auslassöffnung, die so geformt ist, dass sie mit dem Einlass-/Auslassende für die zu erhitzende Flüssigkeit verbunden werden kann; wobei die rohrförmige Buchse (4) teilweise in dem kastenförmigen Körper (1) versenkt ist und sich von diesem so erstreckt, dass der Schlitz (5) in Bezug auf den kastenförmigen Körper (1) außen angeordnet ist.

7. Wärmetauscher (10) nach Anspruch 6, **dadurch gekennzeichnet, dass** die rohrförmige Buchse (4) aus Stahl hergestellt ist.

## Revendications

1. Échangeur de chaleur (10) pour machines de préparation de boissons infusées, comprenant un corps en forme de boîte (1), un conduit (2) pour le passage d'un liquide à réchauffer, ledit conduit (2) étant réalisé en acier et s'étendant à l'intérieur du corps en forme de boîte (1), un élément chauffant placé en contact avec ledit conduit (2) pour le passage du liquide; ledit conduit (2) s'étendant selon un trajet curviligne à l'intérieur dudit corps en forme de boîte (1) et ayant une entrée et une sortie du liquide à réchauffer, **caractérisé en ce qu'**il comprend au moins un support (17) pour contraindre ledit corps en forme de boîte (1) à l'intérieur de la machine (100) de préparation de boissons infusées; ledit au moins un support étant réalisé en un matériau isolant; ledit support (17) formant,
avec ledit corps en forme de boîte, un siège (20) pour accueillir des capteurs de chaleur (21);
- ledit corps en forme de boîte (1) ayant deux demi-sièges (22) desdits sièges d'accueil (20); lesdits demi-sièges (22) étant réalisés sur le côté du corps en forme de boîte (1) faisant face audit support (17) lorsque l'échangeur de chaleur (10) est monté, lesdits demi-sièges (22) comprenant des rainures (23) réalisées sur une côte du corps en forme de boîte (1).

2. Échangeur de chaleur (10) selon la revendication 1, **caractérisé en ce que** ledit au moins un support (17) comprend des premiers moyens de contrainte (16) à l'intérieur de la machine (100) de préparation de boissons infusées; et des seconds moyens de contrainte (19) pour contraindre ledit corps en forme de boîte (1) audit support (17); lesdits premiers moyens de contrainte (16) étant séparés et non en contact avec lesdits seconds moyens de contrainte (19).

3. Échangeur de chaleur (10) selon la revendication 1 ou 2, **caractérisé en ce que** lesdits demi-sièges (22) comprennent des crans (24) pour y verrouiller lesdits capteurs de chaleur (21).

4. Échangeur de chaleur (10) selon l'une quelconque des revendications 1 à 3, **caractérisé en ce que** ledit support (17) présente deux demi-sièges (25) desdits sièges d'accueil (20); lesdits demi-sièges (25) étant réalisé sur un côté du support (17) faisant face audit corps en forme de boîte (1) lorsque l'échangeur de chaleur (10) est monté; lesdits demi-sièges (25) comprenant des rainures (26) réalisées sur un côté du corps en forme de boîte (1).

5. Échangeur de chaleur (10) selon l'une quelconque de revendications 1 à 4, **caractérisé en ce qu'**il comprend deux dispositifs d'accouplement rapide (3) pour coupler ledit conduit (2) aux deux petits tubes (12, 13) du circuit hydraulique de la machine (100) de préparation de boissons infusées; chaque dispositif d'accouplement rapide (3) comprenant au moins une douille tubulaire (4) pourvue d'une entrée/d'une sortie pour un petit tube (12, 13) du circuit hydraulique de la machine (100) de préparation de boissons infusées et de moyens de contrainte amovibles pour contraindre le petit tube (12, 13) à l'intérieur de ladite douille tubulaire (4).

6. Échangeur de chaleur (10) selon la revendication 5, **caractérisé en ce que** lesdits moyens de contrainte amovibles comprennent une fourche (6) et **en ce que** la douille tubulaire (4) comprend une surface latérale comprenant une fente (5) traversant l'insertion de la fourche (6); une entrée d'ouverture pour un tube en caoutchouc ou en plastique dudit circuit hydraulique; ledit tube ayant deux anneaux d'étanchéité (15) espacés entre eux pour former un siège pour la fourche (6); une ouverture de sortie conçue pour être couplée à ladite extrémité d'entrée/de sortie du liquide à réchauffer; ladite douille tubulaire (4) étant partiellement submergée dans le corps en forme de boîte (1) et s'étendant depuis ce dernier de sorte que ladite fente (5) soit positionnée à l'extérieur par rapport audit corps en forme de boîte (1).

7. Échangeur de chaleur (10) selon la revendication 6, **caractérisé en ce que** ladite douille tubulaire (4) est réalisée en acier.
